# EUROPEAN PATENT SPECIFICATION

(11) **EP 0 427 221 B1**
(45) Date of publication and mention of the grant of the patent: **21.07.1993**
(21) Application number: 90121268.8
(22) Date of filing: 07.11.1990
(51) Int. Cl.: E02D 17/20, E04C 1/39

(54) **A prefabricated constructional article with vegetation support, in particular for face walls or retaining walls**
Vorgefertigtes Bauelement mit Begrünungsträger, insbesondere für Stirnmauern oder Stützmauern
Elément de construction préfabriqué avec support de végétation, en particulier pour murs de parement ou murs de soutènement

(30) Priority: 10.11.1989 IT 2234289
(43) Date of publication of application: 15.05.1991
(73) Proprietor: IMPRESA CONCARI PREFABBRICATI DI P. CONCARI, I-42100 Parma (IT)
(72) Inventor: Da Rios, Giovanni, I-20154 Milano (IT)
(74) Representative: Dr. Ing. A. Racheli & C. S.r.l.

(56) References cited:
- EP-A- 0 166 656
- WO-A-86/03217
- DE-A- 3 402 314
- DE-A- 3 728 255
- FR-A- 915 375
- FR-A- 2 577 595

## Description

The present invention relates to support structures for embankments and slopes, as such support structures are built, e.g., in the field of road or railway constructions.

FR-A- 915 375 discloses vertically assemblable flower vases. However they refer to another technical field and could not be used as earth retaining walls.

WO 86/03217 discloses a system for the vertical mounting of bales of a vegetation substance, which have, however, no structural function.

The building of reinforced concrete walls alongside roads generally fulfils a support and/or sound-proofing function. Unfortunately, such walls have a remarkable impact on the surrounding environment and, in order to improve their appearance in the landscape, a vegetable coating is often resorted to. Such a target is generally achieved providing the walls with openings, so as to render accessible the soil supported by said walls or a suitable vegetation support between said wall and the soil, through said openings. Once the building of the face wall is ended, climbing plants, or the like, are sown or planted through said windows. This procedure suffers from several drawbacks: the planting operation is time-consuming and uncomfortable, the exposed wall remains bare for a long time before the plants are capable of developing to a high enough degree in order to coat it.

DE-A-3402314 describes constructional articles according to the preamble of claim 1. Said articles are tray-shaped, are filled with earth and are planted after installation. Also in this case the planting operation is time-consuming and uncomfortable, the exposed wall remains bare for a long time before the plants are capable of developing to a high enough degree in order to coat it.

In order to obviate such drawbacks, a prefabricated panel or constructional article or work, for use as a support means for embankments, has been developped, which comprises layers or mats of a vegetation support fastened to one face thereof which is provided to face the soil, i.e. with the face opposite to the front or exposed wall, and further comprises through-openings connecting the two faces.

According to further preferred features, the panel can comprise, proximate said layers, anchoring sheets of draining material, suitable for being embedded in the soil to be supported, and a system of draining channels in order to drain a possible excess of water.

On the front face of the panel, a lattice-shaped coating can be provided and made integral with said panel, said coating being of a whatever, per se known type, as used in order to allow plants to get anchored onto a wall.

According to a further feature, the panel comprises pre-vegetated plants which are rooted in the substrate and sprout out the exposed wall.

The novel panel or article makes it possible to build concrete retaining or face walls, which display at once an aesthetically pleasant appearance, with no waiting periods; it facilitates the operations relevant to the installation of the vegetable coating, because these latter will be carried out at the factory and not on site; it improves the water supply to the plants of the panel; and results into a better sound absorption.

An embodiment of the invention is disclosed herein in the following fore merely exemplifying, non-limitative purposes, by referring to the hereto attached drawings, wherein:

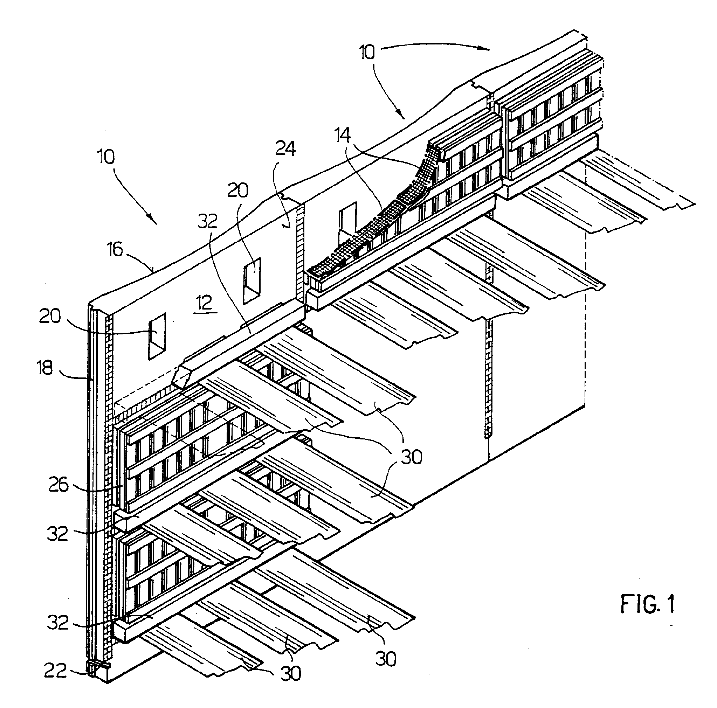

- Figure 1: is a perspective, broken-away view of a wall constituted by a plurality of panels, seen from the side facing the embankment to be supported; some mats of vegetation support material and the anchoring sheets are shown broken-away or incomplete;

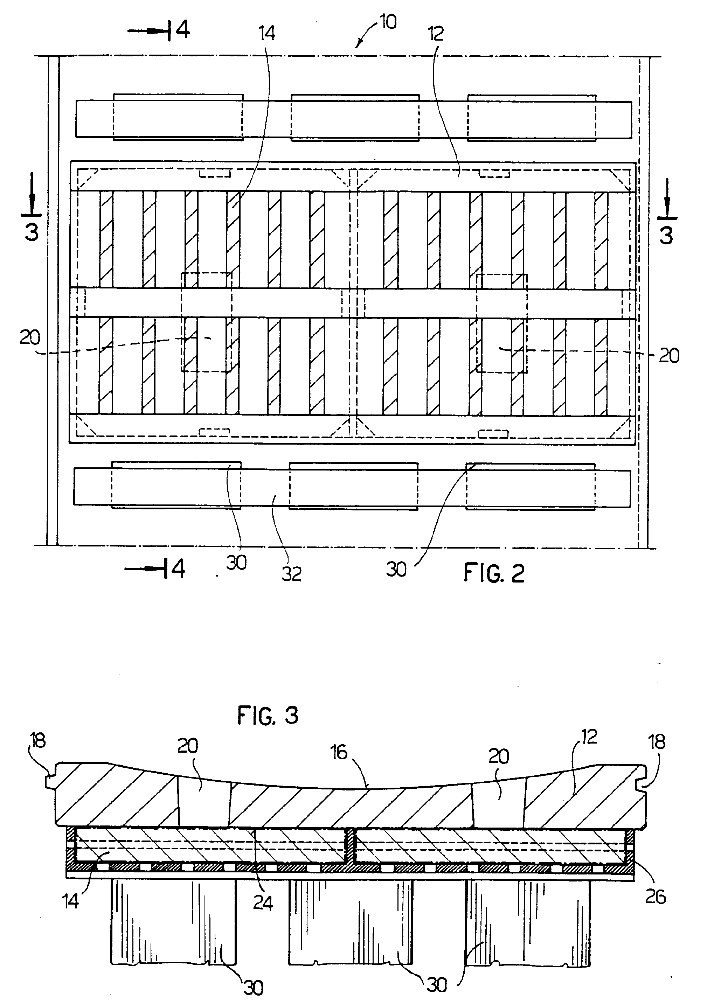

- Figure 2: is a broken-away view of the back of a panel or article according to this invention;
- Figure 3: is a horizontal sectional view according to 3-3 in Figure 2;
- Figure 4: is a sectional view according to 4-4 in Figure 2; a plant rooted in the vegetation support material is also shown;
- Figure 5: is a vertical cross-sectional, schematic, broken-away view of a panel, in horizontal position, during a step of its assembling process;
- Figure 6: is a partial sectional view of a detail of the panel, enlarged with respect to Figure 5;
- Figure 7: is a view similar to Figure 5, showing a subsequent assembling step.

A prefabricated panel or article according to the present patent application is generally indicated by the reference numeral 10 and comprises a concrete layer or plate 12 onto which vegetation support mats or layers, indicated by the reference numeral 14, are fastened.

The plate 12 can be given any desired shapes as regards its exposed face 16; it is preferably provided, along its vertical edges, with coupling means 18 of tenon-and-mortise type; it is equipped with through-slots or through-openings 20 distributed throughout it; and preferably is additionally provided with drain channels 22 possibly running along the vertical coupling edges and, crosswise, proximate the foot of said edges.

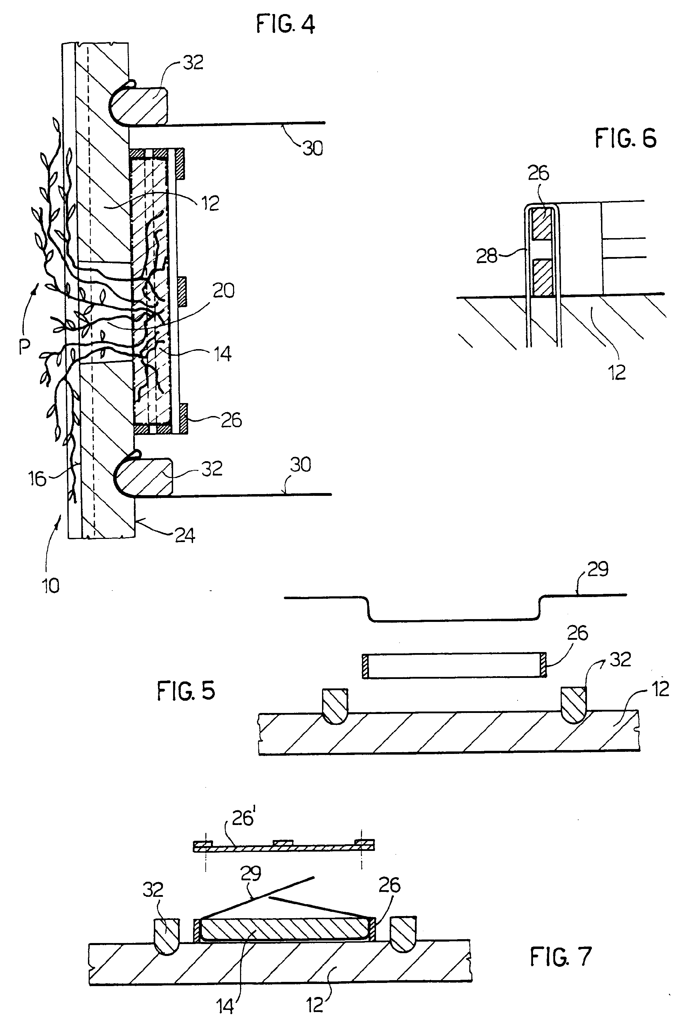

On the face 24 intended to be laid against the embankment or the like, the plate is provided with containers or boxes 26, integral with it, for the vegetation support 14. Such containers or boxes are preferably constituted by wooden staves or bars arranged in cage-like fashion, i.e., spaced apart from each other and with at least a small gap between them. During the manufacturing step, the side wall of each box 26 is fastened to the plate by means of staples 28, as shown in Figure 6. Inside each box, the vegetation material is enclosed inside a wrapping sheet of non-woven fabric 29 anchored to the box in a per se known way. The vegetation material is installed at least in correspondence of the openings 20.

Figure 4 shows a plant P rooted in the vegetation support material which sprout out the exposed wall 16 through the openings 20.

On its face 24, the panel is preferably provided with anchoring sheets 30 fastened at one of their ends to the concrete plate, by means of concrete beams 32. The anchoring sheets 30, per se known, preferably are of a type also capable of performing a draining effect on the soil they are embedded in.

On its exposed face, the panel can be provided with a metal grid, of any per se known type for supporting plants, and therefore not described in greater detail.

The panel, or article, is built as follows: the concrete plate or layer is cast, with the side structure of the box 26 being affixed to it by means of the staples 28 (Figures 5 and 6); the sheet 29 is placed inside the hollow defined by the surface of the plate and the side wall of the box, said sheet 29 is anchored to the box and is filled with the vegetation material 14; the sheet 29 is anchored to a fixed structure and the box is closed with the box cover 26'. Then the vegetables are planted and are caused to grow, and emerge through the windows 20.

The complete panel can be then transported and installed with the plants being already developed.

## Claims

1. A prefabricated panel or constructional article for retaining walls for embankments, slopes, and the like, comprising a concrete plate (12), characterized in that it comprises layers or mats (14) of vegetation support fastened to one face of the plate (12) and through-openings (20) in said plate extending from said layers or mats (14) to the opposite face of said plate (12).

2. A prefabricated panel or constructional article according to claim 1, characterized in that said mats are contained inside a sheet (29) of non-woven fabric and this latter is anchored inside a box-shaped container (26) made integral with the article, said container comprising strips integral with it and spaced apart from each other.

3. A prefabricated panel or constructional article according to claim 2, characterized in that said strips are wooden bars.

4. A prefabricated panel or constructional article according to claim 1, characterized in that it comprises flexible anchoring sheets (30) for anchoring to the soil, said sheets being made of a draining material.

5. A prefabricated panel or constructional article according to claim 1, characterized in that it furthermore comprises plants (P) rooted in said vegetation support and already grown through said openings, so as to sprout out the face of the panel opposite to the one to which the vegetation support is fastened.

6. A process for manufacturing a prefabricated panel or constructional article for earth retaining walls for embankments, slopes, and the like, characterized in that a concrete plate of said panel or article is made, provided with through-openings (20) and in that a layer of vegetation support (14) is fastened to one face (24) of said plate (12) in communication with said openings.

7. A process according to claim 6, characterized in that the side walls of a container box (26), suitable for containing said vegetation support, are integrally affixed onto said concrete plate; a container sheet (29) for the vegetation support is placed inside the hollow defined by the concrete plate and the side walls of the box and said container sheet is anchored to said box; the mat of vegetation support (14) is placed inside said sheet and the sheet is closed; said box is then closed by means of a box cover element.

8. A process according to claim 6, characterized in that, furthermore, the planting of the vegetable coating is carried out on site, and in that the pre-vegetated panel or constructional article is then installed.

## Patentansprüche

1. Vorgefertigtes Bauelement oder strukturierter Artikel für Stützmauern, Erdwalle, Böschungen und dgl. mit einer Betonplatte (12), dadurch gekennzeichnet, daß das Bauelement an einer Wand der Platte (12) feste Schichten oder Matratzen (14) von Begrünungsträgern aufweist und die Platte durchgehende Offungen (20) hat, die sich von den Schichten oder Matratzen (14) bis zu der der Platte (12) gegenüberliegenden Vorderseite erstrecken.

2. Vorgefertigtes Bauelement oder strukturierter Artikel nach Anspruch 1, dadurch gekennzeichnet, daß die Matratzen in einer Bahn (29) aus ungewebtem Stoff enthalten sind, die in einem an dem Artikel festen kastenförmigen Behälter (26) angebracht ist, der aus festen voneinander entfernten Latten besteht.

3. Vorgefertigtes Bauelement nach Anspruch 2, dadurch gekennzeichnet, daß die Latten aus Holz sind.

4. Vorgefertigtes Bauelement nach Anspruch 1, dadurch gekennzeichnet, daß es zum Befestigen im Boden biegsame Bahnen (30) aufweist, die aus drainierendem Werkstoff gebildet sind.

5. Vorgefertigtes Bauelement oder strukturierter Artikel nach Anspruch 1, dadurch gekennzeichnet, daß es außerdem im Begrünungsträger verwurzelte Pflanzen (P) umfaßt, die durch die genannten Löcher schon entwickelt sind, sodaß sie sich auf der Vorderseite des Bauelementes entgegengestzt zu der am Begrünungsbehälter festen Seiten zeigen.

6. Herstellungsverfahren eines vorgefertigten Bauelementes oder strukturiertem Artikel für Stützmauern für Erdwälle, Böschungen und dgl., dadurch gekennzeichnet, daß eine Betonplatte für das Bauelement mit durchgehenden Löchern (20) vorgefertigt wird und daß an einer Seite (24) der Platte (12) in Übereinstimmung mit diesen Löchern eine Schicht (14) des Begrünungsträgers befestigt wird.

7. Verfahren nach Anspruch 6, dadurch gekennzeichnet, daß an der Betonplatte die Seitenwände eines das Begrünungsmaterialträgers enthaltendenden Kastens (26) befestigt werden, daß in dem von der Betonplatte und den Seitenwänden des Kastens begrenzten Raum eine Bahn (29) des Begrünungsträgerinhalts angeordnet und an dem Kasten befestigt wird, daß der Träger (14) des Begrünungsmaterials in diese Bahn angeordnet und die Bahn geschlossen und der Kasten dann mit einer Deckelement geschlossen wird.

8. Verfahren nach Anspruch 6, dadurch gekennzeichnet daß die Anpflanzung der Begrünung am Ort ausgeführt und dann das vorgegrünte Bauelement oder der Strukturartikel an Ort und Stelle montiert wird.

## Revendications

1. Panneau préfabriqué ou élément de construction pour mur de parement ou de soutènement de terre-pleins, talus ou autres comprenant une plaque en béton (12), caractérisé en ce qu'il comprend des couches ou matelas (14) de support de végétation solidaires d'une paroi de la plaque (12) et des ouvertures passantes (20) dans ladite plaque qui s'étendent desdites couches ou matelas (14) jusqu'à la façade opposée de ladite plaque (12).

2. Panneau préfabriqué ou élément de construction selon la revendication 1, caractérisé en ce que lesdits matelas sont contenus dans une toile (29) en tissu non tissu et ce dernier est fixé à l'intérieur d'un récipient (26) en forme de boîte rendu solidaire de l'article, ledit récipient comprenant de petites planches solidaires distancées les unes des autres.

3. Panneau préfabriqué ou élément de construction selon la revendication 2, caractérisé en ce que lesdites petites planches sont en bois.

4. Panneau préfabriqué ou élément de construction selon la revendication 1, caractérisé en ce qu'il comprend des toiles (30) flexibles d'ancrage au terrain, lesdites toiles se composant d'un matériau drainant.

5. Panneau préfabriqué ou élément de construction selon la revendication 1, caractérisé en ce qu'il comprend en outre des plantes (P) plantées dans ledit support de végétation, déjà développées à travers lesdits trous de sorte qu'elles se présentent sur la face du panneau opposée à celle qui est solidaire du support de végétation.

6. Procédé de fabrication d'un panneau préfabriqué ou d'un élément de construction pour murs de soutènement de terre-pleins, de talus ou autres, caractérisé en ce qu'on préfabrique une plaque en béton dudit panneau munie de trous (20) passants, et en ce qu'une face (24) de ladite plaque (12) en communication avec lesdits trous est rendue solidaire d'une couche (14) de support de végétation.

7. Procédé selon la revendication 6, caractérisé en ce que ladite plaque de béton est rendue solidaire des parois latérales d'un récipient (26) contenant ledit matériau de support de végétation; dans l'espace délimité par la plaque en béton et par les parois latérales du récipient on dispose une toile (29) permettant de contenir le support de végétation et on fixe ladite toile audit récipient; on dispose le support (14) de matériau de végétation à l'intérieur de ladite toile et on referme la toile; on ferme ensuite le récipient à l'aide d'un élément en couvercle.

8. Procédé selon la revendication 6, caractérisé en ce que, en outre, on plante sur place des plantes et que l'on monte ensuite le panneau ou élément de construction préalablement planté.
